# FASCICULE DE BREVET EUROPEEN

(11) **EP 2 872 384 B1**
(45) Date de publication et mention de la délivrance du brevet: **02.01.2019**
(21) Numéro de dépôt: 13744692.8
(22) Date de dépôt: 04.07.2013
(51) Int. Cl.: B62K 5/10, B60G 13/18, B60G 13/16, B60G 21/00, B62K 5/027, B62K 5/05, B62K 5/02, B62K 5/01

(54) **TRAIN ROULANT POUR VÉHICULE A DEUX ROUES AVANT INCLINABLES LATÉRALEMENT**
FAHRWERK FÜR EIN FAHRZEUG MIT ZWEI SEITLICH KIPPBAREN VORDERRÄDERN
UNDERCARRIAGE FOR A VEHICLE HAVING TWO LATERALLY TILTABLE FRONT WHEELS

(30) Priorité: 11.07.2012 FR 1256668
(43) Date de publication de la demande: 20.05.2015
(73) Titulaire: Peugeot Motocycles SA, 25350 Mandeure (FR)
(72) Inventeur: AILLET, Jean-Laurent, F-25310 Blamont (FR); DOVERI, Marco, 56030 Ponderata (pisa) (IT); MOISAN, Gwendal, F-90000 Belfort (FR); NAISSE, Stephane, 09100 BENAGUES (FR)
(74) Mandataire: Ménès, Catherine
(86) Numéro de dépôt international: PCT/FR2013/051598
(87) Numéro de publication internationale: WO 2014/009637

(56) Documents cités:
- EP-A1- 1 813 450
- WO-A1-92/02382
- WO-A1-99/41136
- FR-A- 839 855
- FR-A1- 2 921 628
- US-A- 1 824 566
- US-A1- 2010 263 167
- Emmanuel G.: "Salon Moto, Scooter Quad 2011 : Peugeot Scooters - Metropolis Project, (...) | Asso-scooter", , 30 November 2011 (2011-11-30), XP055410191, Retrieved from the Internet: URL:http://www.asso-scooter.org/salon-moto -scooter-quad-2011,1703 [retrieved on 2017-09-26]
- MotoStation: "Peugeot Metropolis 400i : Enfin un 3 roues français !", You Tube, 6 December 2011 (2011-12-06), page 1, XP054977766, Retrieved from the Internet: URL:https://www.youtube.com/watch?v=Qnz6Iw Rzghs [retrieved on 2017-09-28]
- David Morcrette: "Scooter Peugeot Metropolis 400", , 29 November 2011 (2011-11-29), XP055410194, Retrieved from the Internet: URL:http://www.lerepairedesmotards.com/act ualites/2011/actu_111129-scooter-peugeot-m etropolis-400.php [retrieved on 2017-09-26]

## Description

La présente invention concerne le train roulant d'un véhicule à deux roues avant inclinables, tel qu'un scooter.

Afin d'augmenter le confort de conduite et la tenue de route des scooters, le train avant a été amélioré pour certains modèles en incluant deux roues directrices inclinables latéralement. Ce type de véhicule est par exemple décrit dans le document WO 9721583 ou dans la demande de brevet EP 1 180 476 A1.

Cette demande de brevet concerne un véhicule 10 représenté schématiquement sur la figure 1. Le véhicule 10 comporte un châssis 11, supportant un moteur 12, une roue arrière 13 connectée au moteur 12, et deux roues avant 14 et 15 solidaires d'un système de suspension 16 (représenté schématiquement), un guidon 17 et une colonne de direction 18 avec un manchon tubulaire 19 solidaire du châssis 11. Le système de suspension 16 comporte, associé à chacune des roues avant droite 14 et gauche 15, un quadrilatère déformable composé d'un bras de suspension supérieur respectivement 20D (D pour droit) ou 20G (G pour gauche), un bras latéral respectivement 21D ou 21G, un bras inférieur respectivement 22D ou 22G et, pour les deux quadrilatères droit et gauche, l'extrémité inférieure 19i du manchon 19. Le manchon tubulaire 19 comporte deux supports, l'un supérieur 23 et l'autre inférieur 24, soudés audit manchon. Les bras supérieurs 20D et 20G sont reliés, d'une part, au support supérieur 23 par des pivots et, d'autre part, aux bras latéraux 21D et 21G par des rotules respectivement 25 et 26. De même les bras inférieurs 22D et 22G sont reliés, d'une part, au support inférieur 24 par des pivots 27 et, d'autre part, aux bras respectivement 28 et 29. Cette structure parallélépipédique à pivots et rotules permet en se déformant d'incliner le véhicule latéralement, les roues avant restant parallèles (ou du moins approximativement parallèles) entre elles. Les deux bras supérieurs 20D et 20G sont reliés entre eux à l'aide d'une suspension élastique, composée d'un amortisseur à fluide 30 et d'un ressort 31, qui permet un déplacement vertical de la partie avant du véhicule.

Bien qu'intéressante, l'architecture décrite ci-dessus ne donne pas entière satisfaction, notamment en ce qui concerne la tenue de route du scooter.

Il est également connu de EP 1 813 850 A1 un système de suspension pour un module permettant l'inclinaison de deux roues disposées selon un axe commun, muni de moyens pour limiter les fréquences d'oscillations de la roue avant. De même, on connait de WO 9941136 A1, un véhicule à 3 roues dont deux roues avant inclinables muni d'absorbeurs de chocs Enfin, le document intitulé "Salon Moto, Scooter Quad 2011 : Peugeot Scooters - Metropolis Project, Satelis, MD 16 400, XP7" divulgue un scooter avec un train roulant selon le préambule de la revendication 1 (voir http://www.asso-scooter.org/salon-moto-scooter-quad-2011,1703).

La présente invention a pour but d'améliorer la stabilité et la tenue de route d'un véhicule du type décrit ci-dessus, même sur des routes ayant un mauvais revêtement et/ou à vitesse relativement élevée (par exemple supérieure à 80km/h).

De façon plus précise, l'invention concerne un train roulant pour véhicule du type comportant un châssis, deux roues de direction avant et au moins une roue d'entrainement arrière, ledit train roulant comportant, associé à chaque roue, un système de suspension de ladite roue au châssis, le système de suspension comprenant un bras supérieur de suspension, un bras inférieur de suspension et un bras latéral, lesdits bras étant reliés entre eux à l'aide de moyens articulés de sorte qu'un basculement latéral du train roulant conduit à un basculement équivalent des deux roues avant qui restent parallèles entre elles. Par roues parallèles, on entend également des roues approximativement parallèles, tant que l'écart au parallélisme n'est pas perceptible dans la conduite. Ledit train roulant comporte des moyens, solidaires de chaque roue avant, pour supprimer au moins partiellement les fréquences d'oscillation de ladite roue avant qui selon l'invention, comportent, pour chacune desdites roues de direction avant, un batteur fixé en position sensiblement verticale sur l'un desdits bras, qui peut être le bras supérieur ou le bras inférieur ou le bras latéral.

Lesdits moyens peuvent être ajustés pour supprimer, au moins partiellement, les fréquences d'oscillation comprises dans une plage de 10 à 20 Hz, avantageusement centrées autour de 15 Hz.

Selon l'invention, l'angle de chasse du train roulant est compris entre 8 et 18°, de préférence compris entre 12° et 14° et avantageusement sensiblement égal à 13°.

L'invention concerne également un scooter du type comportant deux roues avant et au moins une roue arrière et un train roulant tel que défini précédemment.

D'autres caractéristiques et avantages de l'invention apparaîtront au cours de la description qui suit d'un mode de réalisation de l'invention, donné à titre d'exemple non limitatif, en référence aux dessins annexés et sur lesquels :
- la figure 1 (art antérieur) montre l'architecture connue d'un véhicule comportant deux roues avant inclinables latéralement;
- la figure 2 représente un mode de réalisation d'un train roulant conforme à l'invention; et
- la figure 3 illustre l'angle de chasse.

Selon une caractéristique de l'invention, on adjoint, à chacune des roues de direction avant, des moyens pour supprimer au moins partiellement les fréquences d'oscillation de ladite roue de direction.

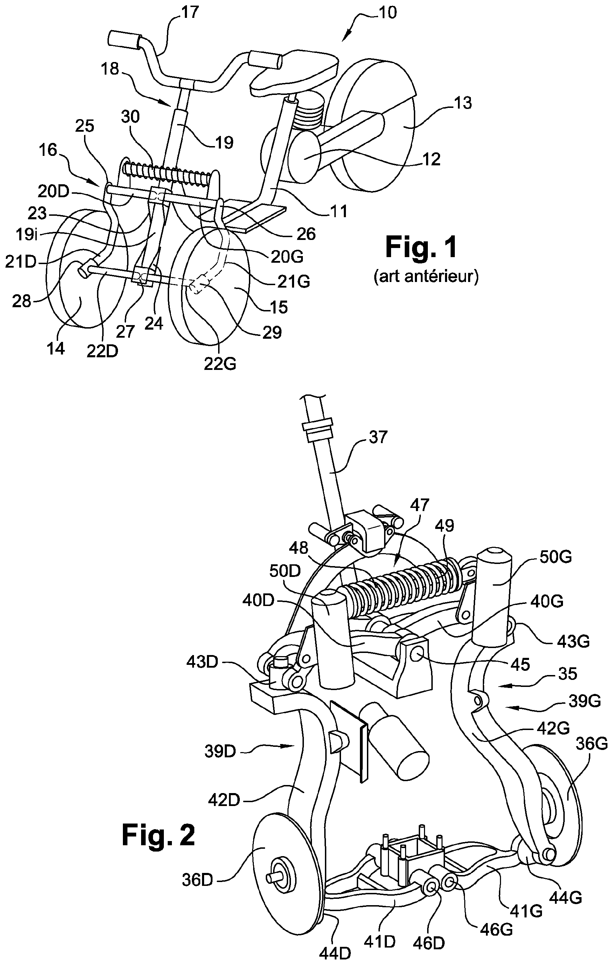

La figure 2 représente le train roulant 35 d'un véhicule muni de deux roues de direction avant, à savoir une roue droite 36D et une roue gauche 36G (par la suite, la lettre D correspond à la partie droite du train roulant et la lettre G correspond à la partie gauche), et d'une colonne de direction 37 solidaire du châssis du véhicule. Ce véhicule est du type représenté schématiquement sur la figure 1. Le train roulant 35 comporte un système de suspension des roues avant, ce système se décomposant en une partie 39D pour la roue droite et une partie 39G pour la roue gauche. Chacune desdites parties 39D et 39G se compose d'un bras supérieur 40D ou 40G, d'un bras inférieur 41D ou 41G et d'un bras latéral 42D ou 42G. Les moyeux 44D et 44G respectivement de la roue droite 36D et de la roue gauche 36G sont fixés aux bras latéraux respectivement 42D et 42G. Les bras de chacune desdites parties sont reliés entre eux par des moyens articulés de sorte qu'un basculement latéral des bras latéraux 42 et des bras supérieurs 40 entrainent un basculement équivalent des roues 36 qui restent parallèles entre elles.

Lesdits moyens articulés comportent des rotules 43D et 43G reliant les bras supérieurs 40D ou 40G aux bras latéraux respectivement 42D et 42G, et des rotules 44D et 44G reliant les bras inférieurs 41D ou 41G aux bras latéraux respectivement 42D et 42G. Les bras supérieurs sont reliés par l'axe d'un pivot 45 et les bras inférieurs sont reliés par les axes de pivots 46D et 46G.

Une suspension élastique 47, composée d'un amortisseur à fluide 48 et d'un ressort 49, relie entre eux les deux bras supérieurs 40D et 40G. Cette suspension 47 permet un déplacement vertical du train roulant 35 du véhicule.

Selon une caractéristique de l'invention, le train roulant comporte des moyens pour atténuer ou supprimer, au moins partiellement, les vibrations du train roulant dues aux vibrations des roues. Il peut en effet se produire une vibration alternée des deux roues en cas de sollicitation verticale sur l'une des deux roues, sollicitation qui reste entretenue à la fréquence propre du train avant (phénomène appelé "drible alterné"). Ce défaut peut être dû à la suspension élastique 47 qui transmet les vibrations d'une roue à l'autre et à la non-coïncidence de la projection sur le sol de l'axe qui passe par les deux rotules de rotation de chaque roue directrice (qui défini l'axe de braquage de ladite roue) avec le plan médian de la roue, créant ainsi, ce que les spécialistes appellent, un "déport au sol positif". L'encombrement du moyeu de roue et du système de freinage est la cause principale de cette non-coïncidence.

Selon un mode de réalisation de l'invention, lesdits moyens pour atténuer ou supprimer, au moins partiellement, les vibrations du train roulant comportent un batteur 50D associé à la roue droite 36D et un batteur 50G associé à la roue gauche 36G, les deux batteurs ayant les mêmes caractéristiques. Un batteur est un dispositif constitué par un cylindre rempli d'huile et dans lequel une masse (généralement en fonte) peut se déplacer librement entre deux ressorts. Les batteurs 50D et 50G sont fixés en position verticale, chacun par exemple à l'aide d'une ou deux vis, aux bras supérieurs respectivement 40D et 40G. Les batteurs pourraient aussi être fixés aux bras latéraux ou aux bras inférieurs. On ajuste la masse du batteur en fonction de la masse non suspendue du train avant (constituée essentiellement par l'ensemble roue, pneu, frein et bras). La fréquence d'oscillation de la masse des batteurs est ajustée à une valeur correspondant à la fréquence d'oscillation de la roue, oscillations dues aux irrégularités et obstacles du revêtement routier.

La fréquence d'oscillation des batteurs est ajustée à une valeur comprise dans une plage de 10Hz à 20Hz, de préférence de 14 à 16 Hz et plus spécialement centrée autour de 15 Hz. Cette fréquence peut être accordée en jouant sur des paramètres tels que par exemple la géométrie du cylindre, le poids de la masse se déplaçant dans le cylindre et/ou les caractéristiques de fluidité du fluide. Cet accord est par exemple décrit à la référence "Dynamique de la voiture automobile" par Maurice Julien, tome 1: dynamique des systèmes, par exemple page 173.

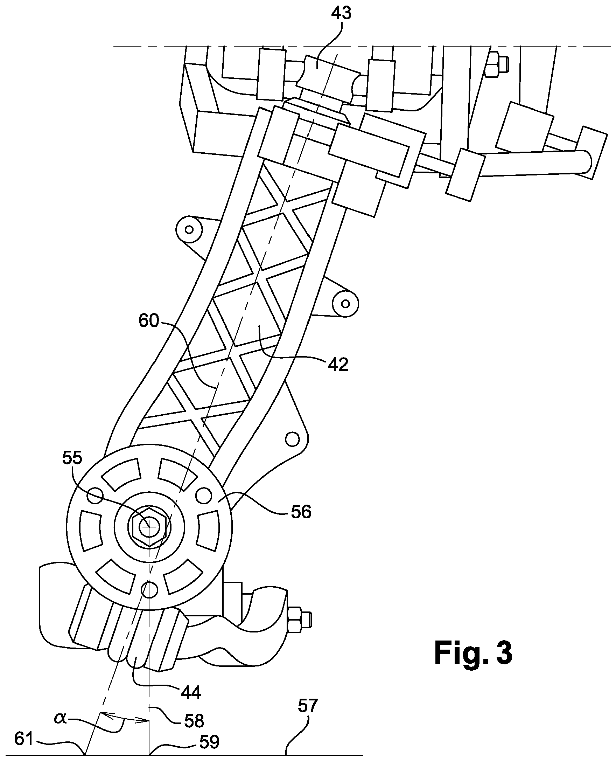

Selon une autre caractéristique de l'invention, l'angle de chasse est compris dans une plage comprise entre 8 et 18°, avantageusement entre 12 et 14° et de préférence égal ou proche de 13°. L'angle de chasse est illustré sur la figure 3 qui est une vue de coté d'une partie du train roulant représenté sur la figure 2. Sur la figure 3, on distingue un bras latéral 42, les rotules 43 et 44 de rotation des bras respectivement supérieur 40 et inférieur 41, l'axe de roue de direction 55, le moyeu de roue 56. Le sol est représenté par la ligne horizontale 57. Le bras latéral 42 est représenté avec son inclinaison par rapport au sol, tel qu'il est monté sur le véhicule. La projection verticale 58 (en pointillés sur la figure) de l'axe de roue 55 sur le sol s'effectue en un point 59 et l'axe 60 (en tirets) joignant les axes de rotation des rotules 43 et 44 coupe la ligne de sol en un point 61. L'angle a entre la verticale 58 et l'axe 60 constitue l'angle de chasse. Les valeurs d'angle de chasse relativement élevées, telles que préconisées par la présente invention, permettent d'améliorer nettement la tenue de route du véhicule à vitesse élevée.

Un véhicule équipé de batteurs et d'un angle de chasse relativement élevé, entre 8 et 18°, peut atteindre des vitesses élevée (voisines de 140 ou 150km/h) avec une bonne tenue de route et un bon confort d'utilisation.

La présente invention concerne aussi un scooter muni de deux roues de direction situées à l'avant du scooter, d'au moins une roue d'entrainement située à l'arrière du scooter et d'un train roulant tel que défini précédemment et illustré par les figures 2 et 3.

## Revendications

1. Train roulant (35) pour véhicule du type comportant un châssis, deux roues de direction avant (36D, 36G) et au moins une roue d'entrainement arrière, ledit train roulant comportant, associé à chaque roue, un système de suspension (39) de ladite roue audit châssis, ledit système (39) comprenant un bras supérieur (40) de suspension, un bras inférieur (41) de suspension et un bras latéral (42), lesdits bras étant reliés entre eux à l'aide de moyens articulés (43, 44, 45, 46) de sorte qu'un basculement latéral du train roulant conduit à un basculement équivalent des deux roues avant qui restent parallèles entre elles, ledit train roulant comportant une suspension élastique (47) composée d'un amortisseur à fluide (48) et d'un ressort (49), reliant entre eux les deux bras supérieurs (40D ; 40G) et des moyens (50), solidaires de chaque roue avant, pour supprimer au moins partiellement les fréquences d'oscillation de ladite roue avant, lesdits moyens comportant, pour chacune desdites roues de direction avant, un batteur (50D, 50G) fixé en position sensiblement verticale sur l'un desdits bras (40, 41, 42) et le train roulant étant **caractérisé en ce qu'**il comporte un angle de chasse (a) compris entre 8 et 18°.

2. Train roulant selon la revendication 1 **caractérisé en ce que** lesdits moyens (50) sont ajustés pour supprimer au moins partiellement les fréquences d'oscillation comprises dans une plage de 10 à 20 Hz.

3. Train roulant selon l'une des revendications 1 et 2 **caractérisé en ce que** lesdites fréquences d'oscillation sont centrées autour de 15 Hz.

4. Train roulant selon l'une des revendications précédentes **caractérisé en ce que** ledit batteur est fixé sur ledit bras supérieur (40) de suspension.

5. Train roulant selon l'une des revendications précédentes **caractérisé en ce que** ledit angle de chasse (a) est compris entre 12° et 14°.

6. Train roulant selon la revendication 5 **caractérisé en ce que** ledit angle de chasse (a) est sensiblement égal à 13°.

7. Scooter du type comportant deux roues avant (36D, 36G) et au moins une roue arrière **caractérisé en ce qu'**il comporte un train roulant (35) tel que défini à l'une des revendications précédentes.

## Patentansprüche

1. Fahrwerk (35) für ein Fahrzeug mit einem Fahrgestell, zwei vorderen Lenkrädern (36D, 36G) und mindestens einem hinteren Antriebsrad, wobei das Fahrwerk ein jedem Rad vom Rad bis zum Fahrgestell zugeordnetes Aufhängungssystem (39) aufweist, wobei das System (39) einen oberen Aufhängungsarm (40), einen unteren Aufhängungsarm (41) und einen seitlichen Arm (42) umfasst, wobei die Arme durch gelenkige Mittel (43, 44, 45, 46) miteinander verbunden sind , so dass eine Schräglage des Fahrwerks zu einer entsprechenden Schräglage der beiden parallel zueinander verbleibenden Vorderräder führt, wobei das Fahrwerk aufweist eine elastische Aufhängung (47), die aus einem Fluiddämpfer (48) und einer Feder (49) besteht, die beide obere Arme (40D; 40G) miteinander verbindet und Mittel (50), die fest mit jedem Vorderrad verbunden sind, um zumindest teilweise die Schwingungsfrequenzen des Vorderrades zu unterdrücken, wobei die Mittel für jedes der vorderen Lenkräder einen Trägheitsdämpfer (50D, 50G) aufweisen, der in einer im Wesentlichen vertikalen Position auf einem der Arme (40, 41, 42) befestigt sind und wobei das Fahrwerk **dadurch gekennzeichnet ist, dass** es einen Nachlaufwinkel (a) zwischen 8 und 18° aufweist.

2. Fahrwerk nach Anspruch 1, **dadurch gekennzeichnet, dass** die Mittel (50) so eingestellt sind, dass sie die Schwingungsfrequenzen zumindest teilweise in einem Bereich von 10 bis 20 Hz unterdrücken.

3. Fahrwerk nach einem der Ansprüche 1 und 2, **dadurch gekennzeichnet, dass** die Schwingungsfrequenzen bei etwa 15 Hz liegen.

4. Fahrwerk nach einem der vorhergehenden Ansprüche, **dadurch gekennzeichnet, dass** der Trägheitsdämpfer an dem oberen Aufhängungsarm (40) befestigt ist.

5. Fahrwerk nach einem der vorhergehenden Ansprüche, **dadurch gekennzeichnet, dass** der Nachlaufwinkel (a) zwischen 12° und 14° liegt.

6. Fahrwerk nach Anspruch 5, **dadurch gekennzeichnet, dass** der Nachlaufwinkel (a) im Wesentlichen 13° beträgt.

7. Motorroller mit zwei Vorderrädern (36D, 36G) und mindestens einem Hinterrad, **dadurch gekennzeichnet, dass** er ein Fahrwerk (35) nach einem der vorhergehenden Ansprüche umfasst.

## Claims

1. Undercarriage (35) for a vehicle of the type comprising a chassis, two front steering wheels (36D, 36G) and at least one rear drive wheel, said undercarriage comprising, combined with each wheel, a suspension system (39) suspending said wheel from said chassis, said system (39) comprising an upper suspension arm (40), a lower suspension arm (41) and a lateral arm (42), said arms being linked together by articulated means (43, 44, 45, 46) such that a lateral tilting of the undercarriage results in an equivalent tilting of the two front wheels which remain parallel to each other, said undercarriage comprising an elastic suspension (47) comprised of a damping fluid (48) and of a spring (49), connecting together the two upper arms (40D ; 40G) and means (50), integral with each front wheel, to at least partially cancel the oscillation frequencies of said front wheel, said means comprising, for each one of said front steering wheels, a damper (50D, 50G) fastened in a substantially vertical position on one of said arms (40, 41, 42) and the undercarriage being **characterised in that** it comprises a caster angle (α) between 8 and 18°.

2. Undercarriage according to claim 1 **characterised in that** said means (50) are adjusted to at least partially cancel the oscillation frequencies within a range from 10 to 20 Hz.

3. Undercarriage according to one of claims 1 and 2 **characterised in that** said oscillation frequencies are centred around 15 Hz.

4. Undercarriage according to one of the preceding claims **characterised in that** said damper is fastened on said upper suspension (40).

5. Undercarriage according to one of the preceding claims **characterised in that** said caster angle (α) is between 12° and 14°.

6. Undercarriage according to claim 5 **characterised in that** said caster angle (α) is substantially equal to 13°.

7. Scooter of the type comprising two front wheels (36D, 36G) and at least one rear wheel **characterised in that** it comprises an undercarriage (35) such as defined in one of the preceding claims.
